# EUROPEAN PATENT SPECIFICATION

(11) **EP 0 816 526 B1**
(45) Date of publication and mention of the grant of the patent: **17.10.2001**
(21) Application number: 97304676.6
(22) Date of filing: 27.06.1997
(51) Int. Cl.: C23C 4/04

(54) **Insulating thermal barrier coating system**
Isolierendes, wärmedämmendes Beschichtungssystem
Système de revêtement barrière thermique isolant

(30) Priority: 27.06.1996 US 671466
(43) Date of publication of application: 07.01.1998
(73) Proprietor: UNITED TECHNOLOGIES CORPORATION, Hartford, CT 06101 (US)
(72) Inventor: Mullooly, John Francis, Jr., Stafford Springs, Connecticut 06076 (US); Nissley, David M., Marlborough, Connecticut 06447 (US); Harter, Harold David, Munhall, Pennsylvania 15120 (US); Shah, Dilip M., Glastonbury, Connecticut 06033 (US); Mahler, Frederic H., West Hartford, Connecticut 06117 (US); Hastings, William J. III, Glastonbury, Connecticut 06025 (US); Donovan, Roy R., Deceased (US); Bose, Sudhangshu, Manchester, Connecticut 06040 (US)
(74) Representative: Leckey, David Herbert

(56) References cited:
- EP-A- 0 266 299
- WO-A-95/12004
- US-A- 4 248 940
- US-A- 4 503 130
- US-A- 4 936 745
- US-A- 5 350 599

## Description

This invention relates to ceralic thermal barrier coating systems used to insulate substrates from elevated temperatures.

Modern gas turbine engines, particularly those used in aircraft, operate at high rotational speeds and high temperatures for increased performance and efficiency. There is a high demand for improved performance and efficiency because of the desire to increase the range an aircraft can fly without stopping to refuel.

Today's modern gas turbine engines rely primarily on nickel base and cobalt base superalloys for the material ofthe engine components in many critical applications. As operating temperatures increase, however, the property limits of the base alloy materials are being approached.

Accordingly, attempts have been made to use coatings to protect certain components within the engine from the harsh operating environment. In particular, ceramic thermal barrier coatings are increasingly employed to protect turbine components, such as turbine blades, thereby extending the life of the blades and permitting enhanced fuel economy. Such protective coatings are necessary because some components in the turbine section must withstand high stresses and corrosive gas streams at temperatures greater than 2500°F (1371°C).

Many ceramic thermal barrier coating system applications, however, include a metallic bond coat which requires a bond coat adherence high temperature heat treatment to maximize the strength of the bond between the substrate and the metallic bond coat. While the bond coat adherence heat treatment is conventionally applied after application of the ceramic material, it could be performed prior to depositing the ceramic material. An exemplary bond coat adherence high temperature heat treatment includes heating a ceramic coated substrate in a nonoxidizing environment for one to ten hours at 1800°F (982°C) to 2050°F (1121°C).

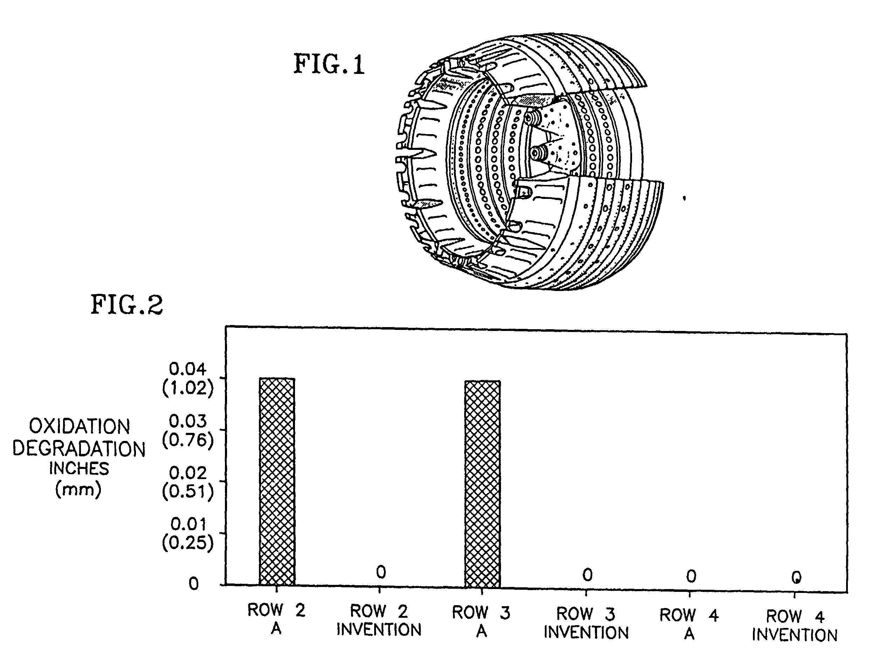

This requirement may not be an undue burden for the coating of 3 inch to 6 inch (7.6 cm-15.2 cm) turbine blades and may in fact be required due to the high temperature, dynamic environment in which the turbine blades operate. However, application of this type of ceramic thermal barrier coating system and its high temperature heat treatment is an undesirable option for many other components in need of protection. For example, sheet metal components, such as the exemplary combustor shown in FIG 1, which are inconveniently large and prone to warpage mitigates against the use of such a bond coat adherence high temperature heat treatment and thus mitigates against the use of a thermal barrier coating system employing such a heat treatment.

In addition, we recently encountered the need to thermally insulate a component without subjecting it to a bond coat adherence high temperature heat treatment because of the need to insulate it in an as machined condition, without any subsequent machining to size, to avoid component distortion. However, to our knowledge we are not aware of an existing thermal barrier coating system having superior insulating characteristics which does not require such a high temperature heat treatment to successfully bond the metallic bond coat to the substrate.

It is known from EP-A-0266299 to provide a ceramic thermal barrier coating system comprising the features of the pre-amble of claim 1. By avoiding the need for a bond coat adherence heat treatment, the coating system can be applied to large components or components which are prone to distortion during heat treatment. A thin abradable ceramic air seal system is also known from US-A-4936745 comprising a bond coat and a ceramic layer. A high temperature bond coat adherence heat treatment is required to maximise the strength of the bond coat to the substrate.

Accordingly, what is needed is a thermal barrier coating system requiring no bond coat adherence high temperature heat treatment and having enhanced insulating capabilities such that it may be applied to gas turbine engine components of varied shape, thickness and size.

It is an object of the present invention to provide an insulating thermal barrier coating system for a metallic substrate.

It is a further object of the present invention to provide an insulating thermal barrier coating system as above requiring no bond coat adherence high temperature heat treatment to form a bond between the metallic bond coat and the metallic substrate to which the metallic bond coat is applied and having enhanced insulating capabilities.

It is yet a further object of the present invention to provide a method of insulating a metallic substrate.

Viewed from a first aspect, the present invention provides an insulating thermal barrier coating system consisting of:
a) a metallic substrate comprising a nickel base or cobalt base superalloy material;
b) a metallic bond coat on the metallic substrate, said metallic bond coat consisting of 15-40 wt. % Co, 10-40 wt. % Cr, 6-15 wt. % Al, 0-0.7 wt. % Si, 0-2.0 wt. % Hf, 0.01-1.0 wt. % Y, balance being Ni apart from inconsequential impurities, wherein the metallic bond coat has received no bond coat adherence heat treatment to form a bond between the metallic bond coat and the metallic substrate; and
c) a ceramic insulating thermal barrier coating on the bond coat, the ceramic insulating coating comprising zirconia partially stabilised with 6-8 wt. % yttria, characterised in that said ceramic insulating thermal barrier coating has a porosity of between 20-35 volume percent.

Preferably the ceramic insulating thermal barrier coating has a thickness of between about 25-50 mils (0.635-1.27 mm). Porosity is intentionally created within the ceramic insulating thermal barrier coating, for example, by incorporating a small amount of polyester powder within the ceramic material.

Viewed from a second aspect, the present invention provides a method of insulating a metallic substrate consisting of:
a) providing a clean metallic substrate;
b) depositing a metallic bond coat on said metallic substrate, said metallic bond coat receiving no bond coat adherence heat treatment to form a bond between the metallic bond coat and the metallic substrate, said metallic bond coat consisting of 15-40 wt. % Co, 10-40 wt. % Cr, 6-15 wt. % Al, 0-0.7 wt. % Si, 0-2.0 wt. % Hf, 0.01-1.0 wt. % Y, balance being Ni apart from inconsequential impurities; and
c) depositing a ceramic insulating thermal barrier coating on the metallic bond coat, the ceramic insulating thermal barrier coating comprising zirconia partially stabilised with 6-8 wt. % yttria,
characterised in that porosity is intentionally created in the ceramic insulating thermal barrier coating at a level of between 20-35 volume percent.

In the case of certain substrate materials, it may be possible to avoid the need for a bond coat altogether. Thus, viewed from a third aspect, the present invention provides a coated article comprising a metallic substrate selected from the group consisting of Ni and Co base superalloys having thereupon an insulating thermal barrier coating consisting of a porous ceramic insulating layer comprising zirconia partially stabilized with 6-8 wt. % yttria, wherein the porous ceramic insulating layer has a porosity between 20-35 volume percent, wherein the substrate has been roughened prior to receiving the insulating layer to ensure bonding of the insulating layer to the substrate.

Certain preferred embodiments of the present invention will now be described by way of example only and with reference to the accompanying drawings, in which:
FIG. 1 is a schematic illustration of a gas turbine combustor;
FIG. 2 is a bar chart depicting oxidation resistance performance of various thermal barrier coating systems applied to different segments of a gas turbine combustor;
FIG. 3 is a cross-section of a portion of a modern gas turbine engine with a first stage turbine vane support area encircled;
FIG. 4 is an enlarged view of the first vane support shown in FIG. 3; and
FIG. 5 is a logarithmic graph depicting life versus temperature for an uncoated first stage turbine vane support and that of a first stage turbine vane support coated with a preferred insulating thermal barrier coating system of the present invention.

According to the present invention an insulating thermal barrier coating system is applied to a metallic substrate. The substrate may be made of a conventional nickel base or cobalt base superalloy material and may be cast and machined to desired final shape/size using known techniques.

Prior to applying the insulating thermal barrier coating system to the substrate, the substrate is prepared to receive the coating system. Preparation is conventional and includes cleaning the substrate surface to remove contamination. Suitable cleaning methods include, but are not limited to, aluminum oxide grit blasting. Preferably, the surface is roughened by the cleaning process to aid the adherence of the subsequently applied bond coat to the substrate.

A metallic bond coat requiring no bond coat adherence high temperature heat treatment is then applied to the substrate. As wilt become apparent from the description set forth herein, a preferred feature of the present invention is use of a metallic bond coat receiving no such high temperature or diffusion heat treatment.

Thus, the invention is particularly advantageous for insulating metallic components prone to distortion during heat treatment or those requiring insulation in an as machined condition. The invention is also particularly advantageous for insulating materials whose properties may not be capable of withstanding exposure to such a high temperature heat treatment without, for example, losing strength or oxidizing. Thus, the invention is advantageous for insulating metallic components which are intolerant of high temperature bond coat diffusion heat treatment cycles.

The invention has particular utility in insulating static gas turbine engine components, such as turbine vanes and turbine vane supports, because these components do not undergo the centrifugal forces as do turbine blades.

Yet another significant advantage is the cost savings associated with eliminating a subsequent heat treatment step.

A metallic bond coat of a NiCoCrAlY material is employed, particularly if oxidation resistance is desired. In the context of this invention, Ni denotes nickel, Co denotes cobalt, Cr denotes chromium, Al denotes aluminum and Y denotes yttrium. The bond coat material has a composition falling within the broad weight percent range of 15-40Co, 10-40Cr, 6-15Al, 0-.7Si, 0-2.0Hf, 0.01-1.0Y, balance essentially Ni. Preferably, the bond coat material has a composition falling within the weight percent range of 20-26Co, 15-19Cr, 11.5-13.5Al, 0-.7Si, 0-2.0Hf, 0.20-0.70Y, balance essentially Ni. The particle size of the bond coat material is preferably within the range -170+325 US std. sieve (44 to 88pm).

The bond coat thickness may be between about 0.001-0.015 inches (0.025 0.381 mm). Preferably the thickness of the bond coat is between about 0.005-0.009 inches (0.127-0.229 mm). The bond coat is preferably plasma sprayed, in air, on the surface of the substrate to be protected. Other deposition techniques, including but not limited to, high velocity oxy fuel (HVOF) spraying or cathodic arc deposition may be employed.

Preferably, the surface topography of the bond coat is such that it is suitable to receive the subsequently applied ceramic material. Preferably, the metallic bond coat is plasma sprayed, in air, which will yield a roughened bond coat surface.

Upon the above described metallic bond coat, a porous ceramic material comprising zirconia partially stabilized with 6 to 8 percent (by weight) yttria is then applied. The ceramic material is preferably plasma sprayed in air and the substrate temperature is maintained at less than 500°F (260°C). Other deposition techniques, including but not limited to, high velocity oxy fuel (HVOF) may also be employed.

The ceramic particle size is between about 5 and about 180 microns (.005 and about .18 mm) and preferably about 50 microns (.05 mm) mean diameter. Porosity is intentionally created within the ceramic coating. Preferably, porosity is achieved by incorporating between about 1-12 weight percent polyester powder within the ceramic. We most prefer the use of 1.5 to 3.0 weight percent polyester powder (60 micron (.06 mm) nominal particle size) with the ceramic to produce a porosity on the order of 20 to 30 volume percent. High porosity levels, in excess of about 35 volume percent, may produce coatings susceptible to erosion damage.

An advantage of intentionally introducing the above described porosity is that it provides spall resistance which allows the ceramic material to be applied at an increased thickness. The thickness of the ceramic coating can range from 25 to 50 mils (.635 to 1.27 mm) and preferably from 25 to 35 mils (.635 to .889 mm).

In another embodiment of the invention, other ceramic materials having low thermal conductivity, including but not limited to, zirconia fully stabilized with yttria, zirconia stabilized with ceria, or ceria may be substituted for the above described zirconia partially stabilized with yttria.

In yet another embodiment of the present invention, the above described ceramic layer may be deposited directly on the metallic substrate, without the use of a bond coat. This embodiment may be feasible for insulation of oxidation resistant alloys, for example, alloys including active elements, such as yttrium, calcium, or magnesium, or alloys made from low sulfur bearing materials, or alloys subsequently desulfurized. For marginally oxidation resistant alloys, direct bonding of the ceramic layer may also be feasible if the substrate is pre-oxidized in a controlled manner to grow a strongly adherent oxide interlayer. With the elimination of the bond coat, this embodiment may be advantageous for static applications in a nonerosive environment or where the substrate temperature can be maintained at less than about 1800°F (982°C). For proper bonding of the ceramic material to the substrate, however, it may be necessary to roughen the surface of the substrate by techniques, including but not limited to, grit blasting. This embodiment is primarily suitable for operating environments in which the coating is not subjected to excessive thermal or mechanical stress at the substrate/ceramic interface.

The present invention will now be described by way of examples which are meant to be exemplary rather than limiting.

### Example 1

Various ceramic thermal barrier coating systems, including preferred embodiments of the present invention, were applied to cast combustor segments. The material of each segment was made from the same base alloy having a nominal composition, in weight percent, of 8.0Cr, 10Co, 6.0Mo, 6.0Al, 4.3Ta, 1.15Hf, 1.0Ti, 0.015B, 0.08Zr, balance Ni (B-1900+Hf). The test segments occupied portions of rows 2, 3 and 4 on the outer liner of a gas turbine combustor.

The liner was then subjected to a severe test employing conditions more demanding than those encountered in normal operation of a gas turbine engine. The test included 1300 cycles. The first 300 cycles were run under normal takeoff conditions; 1000 of the cycles included 5.5 minutes at maximum allowable operating temperature which accelerated the oxidation rate per cycle. It should be noted that the combustion process is such that flame conditions in the region of rows 2 and 3 were hotter than that of row 4.

The benefits of the present invention are clearly illustrated in FIG. 2 FIG. 2 depicts the oxidation damage (or lack thereof) of the various segments. Oxidation damage was determined by visually inspecting each segment for any burned/oxidized portions and determining the approximate severity of damage.

The left-most bar (A) on the chart represents the performance of a coating consisting of zirconia partially stabilized with 6-8 weight percent yttria plasma deposited in air on a NCoCrAlY bond coat (nominal composition, in weight percent, of 23Co, 17Cr, 12.5Al, 0.45Y, balance Ni) which was also plasma deposited in air. The thickness of the bond coat was about 0.007 inches (0.178 mm), and the thickness of the ceramic material was about 0.014 inches (0.356 mm). This Sample A was applied to 5 of 10 segments on row 2 of the outer liner. Sample A did not include any intentionally introduced porosity.

A preferred insulating thermal barrier coating system of the present invention was applied to the remaining 5 segments in row 2 by first plasma spraying, in air, the bond coat. The material of the bond coat had nominal composition, in weight percent, of 23Co, 17Cr, 12.5Al, 0.45Y, balance Ni. Next a porous ceramic material comprising zirconia partially stabilized with 6 to 8 weight percent yttria was air plasma sprayed upon the bond coat. Porosity was intentionally created within the ceramic material through the incorporation of about 2.0 weight percent polyester powder (60 micron (.06 mm) nominal particle size). The thickness of the bond coat and the ceramic material was substantially the same as that of Sample A.

Three (3) out of 5 segments coated with Sample A exhibited trailing edge oxidation damage up to .040 inches (1.02 mm) in depth. None of the 5 segments coated in accordance with the preferred embodiment of the present invention exhibited trailing edge oxidation damage.

The coating of Sample A, as described above, was also applied to 4 of 7 segments tested on row 3 of the outer liner. The preferred insulating thermal barrier coating system of the present invention was applied to the remaining 3 segments tested, as described above except the thickness of the bond coat and the thickness of the ceramic material was increased by a factor of 1.5 each. Four (4) out of 4 segments coated with Sample A coating exhibited trailing edge oxidation damage up to 0.40 inches (1.02 mm). Zero (0) out of 3 segments coated in accordance with the preferred embodiment of the present invention exhibited trailing edge oxidation.

The coating of Sample A, as described above, was applied to 3 of 6 segments tested on row 4 of the outer liner. The preferred insulating thermal barrier coating system of the present invention, as in row 2, was applied to the remaining 3 segments tested. None of the 3 segments coated with Sample A coating exhibited trailing edge oxidation damage. Similarly, 0 out of 3 segments coated in accordance with the preferred embodiment of present invention exhibited trailing edge oxidation.

It can be seen that the coating performance of the preferred embodiments in terms of oxidation degradation resistance meets and even exceeds that of the Sample A coating system when tested under conditions which are more severe than those normally encountered in engine operation. This example also illustrates the superior insulating capabilities of the present invention.

### Example 2

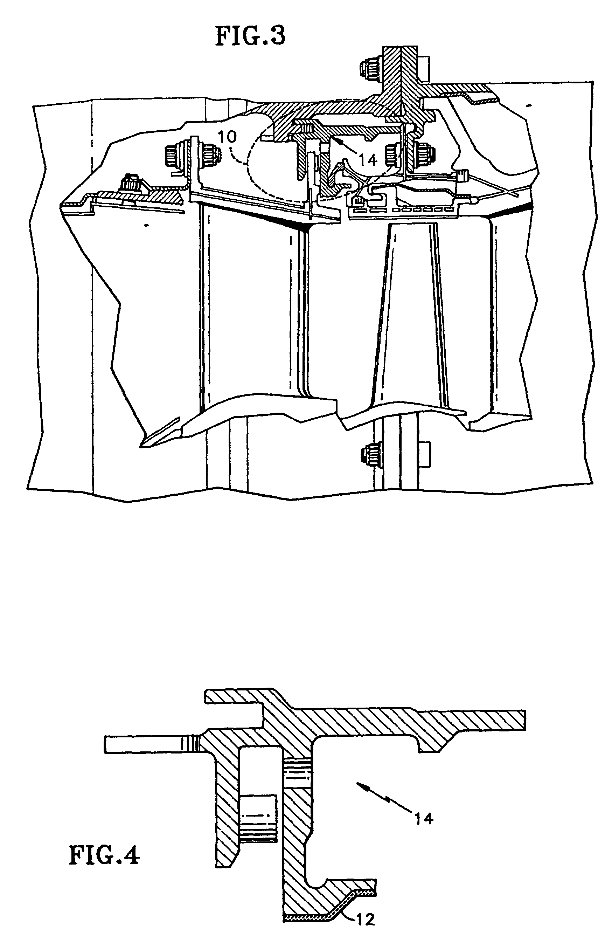

FIG. 3 schematically illustrates a cross-section of a modern gas turbine engine with a first stage turbine vane support area 10 encircled. A preferred insulating thermal barrier coating system 12 of the present invention was applied to the inner diameter surface of a first stage turbine vane support 14, as shown in FIG. 4. The substrate material of the first vane support 14 was 19.5Cr, 13.5Co, 4.25Mo, 3.0Ti, 1.4Al, 0.07Zr, 0.007B, balance Ni (AMS 5707 (Waspaloy)). The inner diameter of the first stage vane support 14 was cleaned and conditioned by aluminum oxide dry blasting prior to application of the insulating thermal barrier coating system 12.

The insulating thermal barrier coating system 12 was then applied by first plasma spraying, in air, a preferred bond coat of the present invention to a thickness of about .003 inches (.076 mm). The material of the bond coat had nominal composition, in weight percent, of 23Co, 17Cr, 12.5Al, 0.45Y, balance being Ni apart from inconsequential and impurities and powder particle sizes within the range -170+325 US std. sieve. (44 to 88pm).

Next a porous ceramic material comprising zirconia partially stabilized with 6 to 8 weight percent yttria was air plasma sprayed upon the bond coat. The substrate temperature was maintained at less than 500°F (260°C).

The size of the ceramic powder particles was about 50 microns (.05 mm) in mean diameter. Porosity was intentionally created within the ceramic material through the incorporation of about 2.0 weight percent polyester powder (60 micron (.06 mm) nominal particle size). The thickness of the ceramic material varied between about 25 and 35 mils (.635 and .889 mm).

The article was then subjected to a 935 cycle engine test simulating flights at various maximum engine power conditions. The article exhibited no cracking upon visual inspection as well as upon fluorescent penetrant inspection.

Another article coated with a preferred insulating thermal barrier coating system of the present invention was tested in an engine operating for five minutes at an exhaust gas temperature approximately 75°F (24°C) above the maximum temperature encountered in normal engine operation. This was a most severe test employing conditions which are more demanding than those normally encountered during typical gas turbine engine operation. This article also exhibited no cracking upon visual inspection as well as upon fluorescent penetrant inspection.

### Example 3

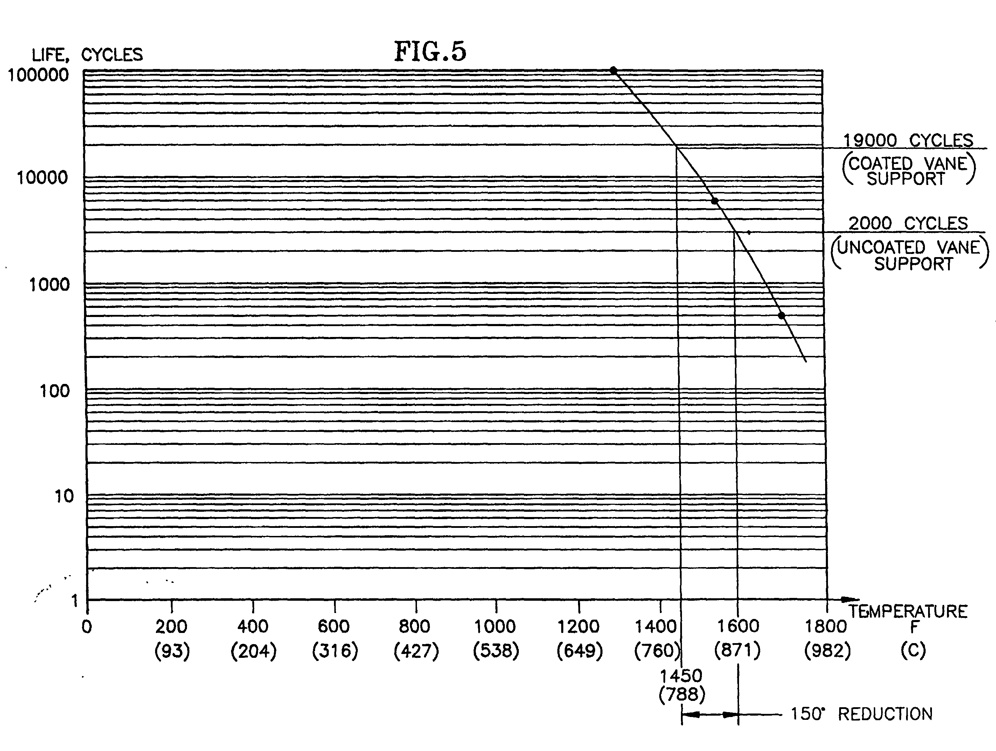

FIG. 5 further illustrates the significant benefits of the present invention. FIG. 5 depicts the life of the first stage turbine vane support 14 with and without a preferred insulating thermal barrier coating system 12 of the present invention versus temperature. As can be seen from the graph, simulated engine operation at a first stage turbine vane support substrate temperature of approximately 1600°F (871°C) as measured by thermocouples resulted in a predicted life of 2000 cycles for an uncoated first stage turbine vane support (AMS 5707 (Waspaloy)). The significance of operation at 1600°F (871°C) is that this temperature is well above the maximum allowable use temperature for AMS 5707.

However, by coating the inner diameter of the first stage turbine vane support 14 with a preferred insulating thermal barrier coating system 12 of the present invention, the substrate temperature ofthe first stage turbine vane support 14 was calculated to be reduced to approximately 1450°F (788°C) and an extended predicted life of 19,000 cycles under the same operating conditions was achieved. The extension of life by 17,000 cycles illustrates the tremendous insulating benefit of the present invention.

## Claims

1. An insulating thermal barrier coating system consisting of:
a) a metallic substrate comprising a nickel base or cobalt base superalloy material;
b) a metallic bond coat on the metallic substrate, said metallic bond coat consisting of 15-40 wt. % Co, 10-40 wt. % Cr, 6-15 wt. % Al, 0-0.7 wt. % Si, 0-2.0 wt. % Hf, 0.01-1.0 wt. % Y, balance being Ni apart from inconsequential impurities, wherein the metallic bond coat has received no bond coat adherence heat treatment to form a bond between the metallic bond coat and the metallic substrate; and
c) a ceramic insulating thermal barrier coating on the bond coat, the ceramic insulating coating comprising zirconia partially stabilised with 6-8 wt. % yttria, **characterised in that** said ceramic insulating thermal barrier coating has a porosity of between 20-35 volume percent.

2. A system as claimed in claim 1, wherein said metallic bond coat has a thickness between 0.001-0.015 inches (0.025-0.381 mm).

3. A system as claimed in claim 1 or 2, wherein the ceramic insulating thermal barrier coating has a thickness between 25-50 mils (0.635-1.27 mm).

4. A system as claimed in claim 1, 2 or 3, wherein said metallic bond coat consists of 20-26 wt. % Co, 15-19 wt. % Cr, 11.5-13.5 wt. % Al, 0-0.7 wt. % Si, 0-2.0 wt. % Hf, 0.20-0.70 wt. % Y, balance being Ni apart from inconsequential impurities.

5. A system as claimed in claim 4, wherein said metallic bond coat consists of 23 wt. % Co, 17 wt. % Cr, 12.5 wt. % Al, 0.45 wt. % Y, balance being Ni apart from inconsequential impurities.

6. A gas turbine engine component comprising the insulating thermal barrier coating system of any preceding claim.

7. A gas turbine engine component as claimed in claim 6, wherein the component is a first stage turbine vane support.

8. A gas turbine engine component as claimed in claim 6, wherein the component is a combustor liner.

9. A gas turbine engine component as claimed in claim 6, wherein the component is a segment of a combustor.

10. A gas turbine engine component as claimed in any of claims 6 to 9, wherein said metallic substrate is roughened prior to receiving the ceramic insulating thermal barrier coating to ensure bonding of the ceramic insulating coating to the substrate, and wherein said ceramic insulating thermal barrier coating has been exposed to operational heat.

11. A method of insulating a metallic substrate consisting of:
a) providing a clean metallic substrate;
b) depositing a metallic bond coat on said metallic substrate, said metallic bond coat receiving no bond coat adherence heat treatment to form a bond between the metallic bond coat and the metallic substrate, said metallic bond coat consisting of 15-40 wt. % Co, 10-40 wt. % Cr, 6-15 wt. % Al, 0-0.7 wt. % Si, 0-2.0 wt. % Hf, 0.01-1.0 wt. % Y, balance being Ni apart from inconsequential impurities; and
c) depositing a ceramic insulating thermal barrier coating on the metallic bond coat, the ceramic insulating thermal barrier coating comprising zirconia partially stabilised with 6-8 wt. % yttria, **characterised in that** porosity is intentionally created in the ceramic insulating thermal barrier coating at a level of between 20-35 volume percent.

12. A method as claimed in claim 11, wherein the porous ceramic insulating thermal barrier coating is deposited to a thickness of between 25-50 mils (0.635-1.27 mm)

13. A method as claimed in claim 11 or 12, wherein said porous ceramic insulating thermal barrier coating is formed by depositing a ceramic layer comprising zirconia partially stabilised with 6-8 wt. % yttria and 1-12 wt. % polyester and subsequently exposing said ceramic layer to operational heat.

14. A method as claimed in claim 13, wherein said porous ceramic layer is formed by depositing a ceramic layer comprising zirconia partially stabilised with 6-8 wt. % yttria and 1.5-3 wt. % polyester.

15. A method as claimed in any of claims 11 to 14, wherein the substrate surface is cleaned by grit blasting prior to depositing the metallic bond coat.

16. A method as claimed in any of claims 11 to 15, wherein the metallic bond coat is deposited by plasma spray, in air.

17. A method as claimed in any of claims 11 to 15, wherein the metallic bond coat is deposited by high velocity oxy fuel spraying.

18. A method as claimed in any of claims 11 to 15, wherein the metallic bond coat is deposited by cathodic arc deposition.

19. A coated article comprising a metallic substrate selected from the group consisting of Ni and Co base superalloys having thereupon an insulating thermal barrier coating consisting of a porous ceramic insulating layer comprising zirconia partially stabilized with 6-8 wt. % yttria, wherein the porous ceramic insulating layer has a porosity of between 20-35 volume percent, wherein the substrate has been roughened prior to receiving the insulating layer to ensure bonding of the insulating layer to the substrate.

20. A coated article as claimed in claim 19, wherein the coated article is a gas turbine engine component.

21. A coated article as claimed in claim 20, wherein the gas turbine engine component is a first stage turbine vane support.

22. A coated article as claimed in claim 20, wherein the gas turbine engine component is a combustor liner.

## Patentansprüche

1. Isolierendes Wärmebarrieren-Beschichtungssystem, bestehend aus:
a) einem Metallsubstrat, das eine Superlegierung auf Nickelbasis oder Kobaltbasis aufweist;
b) einer Metallverbindungsbeschichtung auf dem Metallsubstrat, wobei die Metallverbindungsbeschichtung besteht aus 15-40 Gew.-% Co, 10-40 Gew.-% Cr, 6-15 Gew.-% Al, 0-0,7 Gew.-% Si, 0-2,0 Gew.-% Hf, 0,01-1,0 Gew.-% Y, Rest Ni abgesehen von unbedeutenden Verunreinigungen, wobei die Metallverbindungsbeschichtung keine Verbindungsbeschichtungs-Haftungs-Wärmebehandlung erhalten hat, um eine Verbindung zwischen der Metallverbindungsbeschichtung und dem Metallsubstrat herzustellen; und
c) eine Keramikisolierungs-Wärmebarrieren-Beschichtung auf der Verbindungsbeschichtung, wobei die Keramikisolierungs-Beschichtung Zirkonoxid, teilstabilisiert mit 6-8 Gew.-% Yttriumoxid, aufweist,
**dadurch gekennzeichnet,**
**daß** die Keramikisolierungs-Wärmebarrieren-Beschichtung eine Porosität von 20 bis 35 Volumenprozent aufweist.

2. System nach Anspruch 1,
wobei die Metallverbindungsbeschichtung eine Dicke von 0,001 bis 0,015 Inch (0,025 bis 0,381 mm) aufweist.

3. System nach Anspruch 1 oder 2,
wobei die Keramikisolierungs-Wärmebarrieren-Beschichtung eine Dicke von 25 bis 50 mil (0,635 bis 1,27 mm) aufweist.

4. System nach Anspruch 1, 2 oder 3,
wobei die Metallverbindungsbeschichtung besteht aus 20-26 Gew.-% Co, 15-19 Gew.-% Cr, 11,5-13,5 Gew.-% Al, 0-0,7 Gew.-% Si, 0-2,0 Gew.-% Hf, 0,20- 0,70 Gew.-% Y, Rest Ni abgesehen von unbedeutenden Verunreinigungen.

5. System nach Anspruch 4,
wobei die Metallverbindungsbeschichtung besteht aus 23 Gew.-% Co, 17 Gew.-% Cr, 12,5 Gew.-% Al, 0,45 Gew.-% Y, Rest Ni abgesehen von unbedeutenden Verunreinigungen.

6. Gasturbinen-Triebwerkkomponente mit dem isolierenden Wärmebarrieren-Beschichtungssystem nach einem der vorausgehenden Ansprüche.

7. Gasturbinen-Triebwerkkomponente nach Anspruch 6,
wobei die Komponente eine Leitschaufelhalterung einer ersten Turbinenstufe ist.

8. Gasturbinen-Triebwerkkomponente nach Anspruch 6,
wobei die Komponente eine Brennkammerauskleidung ist.

9. Gasturbinen-Triebwerkkomponente nach Anspruch 6,
wobei die Komponente ein Segment einer Brennkammer ist.

10. Gasturbinen-Triebwerkkomponente nach einem der Ansprüche 6 bis 9,
wobei das Metallsubstrat aufgerauht ist, bevor es die Keramikisolierungs-Wärmebarrieren-Beschichtung erhält, um eine Verbindung der Keramikisolierungs-Beschichtung mit dem Substrat zu gewährleisten, und wobei die Keramikisolierungs-Wärmebarrieren-Beschichtung der im Betrieb auftretenden Wärme ausgesetzt worden ist.

11. Verfahren zum Isolieren eines Metallsubstrats, das folgende Schritte aufweist:
a) Vorsehen eines sauberen Metallsubstrats;
b) Aufbringen einer Metallverbindungsbeschichtung auf das Metallsubstrat, wobei die Metallverbindungsbeschichtung keine Verbindungsbeschichtungs-Haftungs-Wärmebehandlung erhält, um eine Verbindung zwischen der Metallverbindungsbeschichtung und dem Metallsubstrat herzustellen, und wobei die Metallverbindungsbeschichtung besteht aus 15-40 Gew.-% Co, 10-40 Gew.-% Cr, 6-15 Gew.-% Al, 0-0,7 Gew.-% Si, 0-2,0 Gew.-% Hf, 0,01-1,0 Gew.-% Y, Rest Ni abgesehen von unbedeutenden Verunreinigungen; und
c) Aufbringen einer Keramikisolierungs-Wärmebarrieren-Beschichtung auf die Metallverbindungsbeschichtung, wobei die Keramikisolierungs-Wärmebarrieren-Beschichtung Zirkonoxid, teilstabilisiert mit 6-8 Gew.-% Yttriumoxid, aufweist,
**dadurch gekennzeichnet,**
**daß** Porosität gezielt in der Keramikisolierungs-Wärmebarrieren-Beschichtung in einem Niveau von 20 bis 35 Volumenprozent erzeugt wird.

12. Verfahren nach Anspruch 11,
wobei die poröse Keramikisolierungs-Wärmebarrieren-Beschichtung in einer Dicke von 25 bis 50 mil (0,635 bis 1,27 mm) aufgebracht wird.

13. Verfahren nach Anspruch 11 oder 12,
wobei die poröse Keramikisolierungs-Wärmebarrieren-Beschichtung gebildet wird durch Aufbringen einer Keramikschicht, die Zirkonoxid teilstabilisiert mit 6-8 Gew.-% Yttriumoxid und 1-12 Gew.-% Polyester aufweist, sowie durch anschließendes Aussetzen der Keramikschicht gegenüber der im Betrieb auftretenden Wärme.

14. Verfahren nach Anspruch 13,
wobei die poröse Keramikschicht gebildet wird durch Aufbringen einer Keramikschicht, die Zirkonoxid teilstabilisiert mit 6-8 Gew.-% Yttriumoxid und 1,5-3 Gew.-% Polyester aufweist.

15. Verfahren nach einem der Ansprüche 11 bis 14,
wobei die Substratoberfläche durch Sandstrahlen gereinigt wird, bevor die Aufbringung der Metallverbindungsbeschichtung erfolgt.

16. Verfahren nach einem der Ansprüche 11 bis 15,
wobei die Metallverbindungsbeschichtung durch Plasmasprühen an der Luft aufgebracht wird.

17. Verfahren nach einem der Ansprüche 11 bis 15,
wobei die Metallverbindungsbeschichtung durch Aufsprühen von Oxy-Brennstoff mit hoher Geschwindigkeit aufgebracht wird.

18. Verfahren nach einem der Ansprüche 11 bis 15,
wobei die Metallverbindungsbeschichtung durch Kathoden-Lichtbogenaufbringung aufgebracht wird.

19. Beschichteter Gegenstand mit einem Metallsubstrat, das ausgewählt ist aus der Gruppe bestehend aus Superlegierungen auf Ni- und Co-Basis, auf denen eine isolierende Wärmebarrieren-Beschichtung vorhanden ist, die aus einer porösen keramischen Isolierschicht besteht, die Zirkonoxid teilstabilisiert mit 6-8 Gew.-% Yttriumoxid aufweist, wobei die poröse keramische Isolierschicht eine Porosität von 20 bis 35 Volumenprozent aufweist und wobei das Substrat aufgerauht worden ist, bevor es die Isolierschicht erhalten hat, um eine Verbindung der Isolierschicht mit dem Substrat zu gewährleisten.

20. Beschichteter Gegenstand nach Anspruch 19,
wobei der beschichtete Gegenstand eine Gasturbinen-Triebwerkkomponente ist.

21. Beschichteter Gegenstand nach Anspruch 20,
wobei die Gasturbinen-Triebwerkkomponente eine Leitschaufelhalterung einer ersten Turbinenstufe ist.

22. Beschichteter Gegenstand nach Anspruch 20,
wobei die Gasturbinen-Triebwerkkomponente eine Brennkammerauskleidung ist.

## Revendications

1. Système de revêtement isolant à effet de barrière thermique, consistant en :
a) un substrat métallique comprenant un matériau superalliage à base de nickel ou de cobalt ;
b) un revêtement métallique de liaison sur le substrat métallique, ledit revêtement métallique de liaison consistant en 15 - 40 % en poids de Co, 10 - 40 % en poids de Cr, 6 - 15 % en poids d'Al, 0 - 0,7 % en poids de Si, O - 2,0 % en poids de Hf, 0,01 - 1,0 % en poids de Y, le reste étant constitué de Ni et d'impuretés sans conséquences, où le revêtement métallique de liaison n'a pas reçu de traitement thermique d'adhérence du revêtement de liaison pour former une liaison entre le revêtement métallique de liaison et le substrat métallique ; et
c) un revêtement isolant céramique à effet de barrière thermique sur le revêtement de liaison, le revêtement isolant céramique comprenant de la zircone partiellement stabilisée avec 6 - 8 % en poids d'oxyde d'yttrium, **caractérisé en ce que** ledit revêtement isolant céramique à effet de barrière thermique a une porosité comprise entre 20 - 35 % en volume.

2. Système selon la revendication 1, dans lequel ledit revêtement métallique de liaison a une épaisseur comprise entre 0,001 et 0,015 pouce (0,025 et 0,381 mm).

3. Système selon la revendication 1 ou 2, dans lequel le revêtement isolant céramique à effet de barrière thermique a une épaisseur de 25 à 50 mils (0,635 à 1,27 mm).

4. Système selon la revendication 1, 2 ou 3, dans lequel ledit revêtement métallique de liaison consiste en 20 - 26 % en poids de Co, 15 - 19 % en poids de Cr, 11,5 - 13,5 % en poids d'Al, 0 - 0,7 % en poids de Si, O - 2,0 % en poids de Hf, 0,20 - 0,70 % en poids de Y, le reste étant constitué de Ni et d'impuretés sans conséquences.

5. Système selon la revendication 4, dans lequel ledit revêtement métallique de liaison consiste en 23 % en poids de Co, 17 % en poids de Cr, 12,5 % en poids d'Al, 0,45 % en poids de Y, le reste étant constitué de Ni et d'impuretés sans conséquences.

6. Composant de turbo-moteur comprenant le système de revêtement isolant à effet de barrière thermique selon l'une quelconque des revendications précédentes.

7. Composant de turbo-moteur selon la revendication 6, dans lequel le composant est un support d'aube fixe de turbine du premier étage.

8. Composant de turbo-moteur selon la revendication 6, dans lequel le composant est une chemise intérieure de chambre de combustion.

9. Composant de turbo-moteur selon la revendication 6, dans lequel le composant est un segment d'une chambre de combustion.

10. Composant de turbo-moteur selon l'une quelconque des revendications 6 à 9, dans lequel ledit substrat métallique est rendu rugueux avant de recevoir le revêtement isolant céramique à effet de barrière thermique pour assurer une liaison du revêtement isolant céramique au substrat, et dans lequel ledit revêtement isolant céramique à effet de barrière thermique a été exposé à la chaleur opérationnelle.

11. Procédé pour isoler un substrat métallique, qui consiste :
a) à fournir un substrat métallique propre,
b) à déposer un revêtement métallique de liaison sur ledit substrat métallique, ledit revêtement métallique de liaison ne recevant pas de traitement thermique d'adhérence du revêtement de liaison pour former une liaison entre le revêtement métallique de liaison et le substrat métallique, ledit revêtement métallique de liaison consistant en 15 - 40 % en poids de Co, 10 - 40 % en poids de Cr, 6 - 15 % en poids d'Al, O - 0,7 % en poids de Si, O - 2,0 % en poids de Hf, 0,01 - 1,0 % en poids de Y, le reste étant constitué de Ni et d'impuretés sans conséquences ; et
c) à déposer un revêtement isolant céramique à effet de barrière thermique sur le revêtement métallique de liaison, le revêtement isolant céramique à effet de barrière thermique comprenant de la zircone partiellement stabilisée par 6 - 8% en poids d'oxyde d'yttrium,
**caractérisé en ce qu'**une porosité est créée intentionnellement dans le revêtement isolant céramique à effet de barrière thermique, à un niveau compris entre 20 - 35 % en volume.

12. Procédé selon la revendication 11, dans lequel le revêtement isolant thermique poreux à effet de barrière thermique est déposé sur une épaisseur comprise entre 25 et 50 mils (0,635 et 1,27 mm).

13. Procédé selon la revendication 11 ou 12, dans lequel ledit revêtement isolant céramique poreux à effet de barrière thermique est formé par dépôt d'une couche céramique comprenant de la zircone partiellement stabilisée par 6 - 8 % en poids d'oxyde d'yttrium et
1 - 12 % en poids de polyester, puis exposition de la ladite couche céramique à la chaleur opérationnelle.

14. Procédé selon la revendication 13, dans lequel ladite couche céramique poreuse est formée par dépôt d'une couche céramique comprenant de la zircone partiellement stabilisée par 6 - 8 % en poids d'oxyde d'yttrium et 1,5 - 3 % en poids de polyester.

15. Procédé selon l'une quelconque des revendications 11 à 14, dans lequel la surface du substrat est nettoyée par grenaillage avant dépôt du revêtement métallique de liaison.

16. Procédé selon l'une quelconque des revendications 11 à 15, dans lequel le revêtement métallique de liaison est déposé par pulvérisation par plasma dans l'air.

17. Procédé selon l'une quelconque des revendications 11 à 15, dans lequel le revêtement métallique de liaison est déposé par projection thermique par oxyflamme à grande vitesse.

18. Procédé selon l'une quelconque des revendications 11 à 15, dans lequel le revêtement métallique de liaison est déposé par dépôt par arc cathodique.

19. Objet revêtu, comprenant un substrat métallique choisi dans le groupe consistant en les superalliages à base de Ni et de Co ayant sur eux un revêtement isolant à effet de barrière thermique, constitué d'une couche isolante céramique poreuse comprenant de la zircone partiellement stabilisée par 6 - 8 % en poids d'oxyde d'yttrium, dans lequel la couche isolante céramique poreuse a une porosité entre 20 - 35 % en volume, dans lequel le substrat a été rendu rugueux avant de recevoir la couche isolante pour assurer la fixation de la couche isolante au substrat.

20. Objet revêtu selon la revendication 19, dans lequel l'objet revêtu est un composant d'un turbo-moteur.

21. Objet revêtu selon la revendication 20, dans lequel le composant de turbo-moteur est un support d'aube fixe de turbine du premier étage.

22. Objet revêtu selon la revendication 20, dans lequel le composant de turbo-moteur est une chemise intérieure de chambre de combustion.
